# EUROPÄISCHE PATENTANMELDUNG

(11) **EP 1 637 429 A2**
(43) Veröffentlichungstag der Anmeldung: **22.03.2006**
(21) Anmeldenummer: 05108230.3
(22) Anmeldetag: 08.09.2005
(51) Int. Cl.: B61L 5/02, E01B 7/00, F16B 21/12

(54) **Vorrichtung zur Kraft- und Bewegungsübertragung**

(30) Priorität: 20.09.2004 DE 102004046339
(71) Anmelder: SIEMENS AKTIENGESELLSCHAFT, 80333 München (DE)
(72) Erfinder: Abraham, Simon, 10115, Berlin (DE)

(57) **Zusammenfassung**

Die Erfindung betrifft eine Vorrichtung zur Kraft- und Bewegungsübertragung mit einer Stange, insbesondere Gelenkstange (1), die an einem Gelenklager (4) befestigt ist, welches mittels eines Lagerinnenringes (6) auf einen Bolzen (5) fixiert ist. Um die Montierbarkeit bzw. Demontierbarkeit des Gelenklagers (4) auf den Bolzen (5) zu erleichtern und ohne Werkzeug zu ermöglichen, ist zwischen dem Lagerinnenring (6) und dem Bolzen (5) eine Untermaßpassung vorgesehen, wobei der Bolzen (5) eine umlaufende Nut (7) aufweist, in die ein Federring (8) zur kraftschlüssigen Verbindung von Lagerinnenring (6) und Bolzen (5) einsetzbar ist.

## Beschreibung

Die Erfindung betrifft eine Vorrichtung zur Kraft- und Bewegungsübertragung gemäß dem Oberbegriff fes Anspruchs 1.

Bei einer bekannten Vorrichtung dieser Art wird das Gelenklager, an dem die Stange bzw. Gelenkstange befestigt ist, mittels einer Übermaßpassung zwischen dem Lagerinnenring und dem Bolzen auf diesem fixiert. Die Übermaßpassung sorgt für eine feste, spielfreie Verbindung des Lagerinnenringes mit dem Bolzen. Außerdem ergibt sich eine Verdrehsicherung zwischen beiden Elementen. Die Drehbewegung findet so zwingend im Gelenklager selbst statt. Nachteilig bei dieser Vorrichtung ist vor allem die kraftaufwändige Montage bzw. Demontage, die ohne Spezialwerkzeuge kaum zu bewerkstelligen ist. Darüber hinaus können wegen der Übermaßpassung und der damit verbundenen erheblichen Reibung bei der Montage bzw. Demontage Beschädigungen und Verschleißerscheinungen auftreten. Insbesondere bei Vorrichtungen, die justiert werden müssen und zu diesem Zweck unter Umständen mehrmals montiert und demontiert werden müssen, entstehen dadurch erhebliche Probleme. Auch bei sicherheitskritischen Einrichtungen oder aufgrund der betrieblichen Belastung besonders verschleißanfälligen Einrichtungen, bei denen regelmäßig Wartungsarbeiten durchgeführt werden müssen, erweist sich die schwierige Montage bzw. Demontage als sehr nachteilig.

Der Erfindung liegt die Aufgabe zugrunde, eine Vorrichtung der gattungsgemäßen Art anzugeben, die sich durch erheblich leichtere Montierbarkeit bzw. Demontierbarkeit auszeichnet.

Die Aufgabe wird erfindungsgemäß mit den kennzeichnenden Merkmalen des Anspruchs 1 gelöst. Durch die leichte Untermaßpassung zwischen Lagerinnenring und Bolzen lässt sich das Gelenklager problemlos und ohne Werkzeug auf den Bolzen aufschieben. Die notwendige kraftschlüssige Verbindung zwischen Lagerinnenring und Bolzen wird durch einen Federring hergestellt, der in eine umlaufende Nut in der Mantelperipherie des Bolzens einsetzbar ist. Die Nut befindet sich vorzugsweise etwa in der Mitte des Lagersitzes. Die Nuttiefe ist derart zu wählen, dass sich das Gelenklager mit der Hand oder mit leichten Schlägen über den Federring treiben lässt. Auf diese Weise wird eine feste Verbindung zwischen Lagerinnenring und Bolzen erreicht, wodurch ein Mitdrehen des Lagerinnenringes auf den Bolzen verhindert wird. Nur das Gelenklager selbst, beispielsweise ein Kugellager, gestattet ein Schwenken oder Drehen der Gelenkstange um die Längsachse des Bolzens.

Bei Justierarbeiten ergibt sich darüber hinaus der Vorteil, dass der Federring während der Justierarbeiten noch nicht eingesetzt werden muss, so dass mehrfaches Abnehmen und Wiederaufsetzen des Gelenklagers auf dem Bolzen für Justierzwecke ohne jegliche Kraftanstrengung möglich ist. Erst nach Abschluss der Justierarbeiten, quasi bei der endgültigen Montage, wird der Federring eingesetzt, um eine verdrehsichere Befestigung des Gelenklagers auf den Bolzen sicherzustellen.

Gemäß Anspruch 2 sind zur Fixierung des Gelenklagers auf den Bolzen in axialer Bolzenrichtung ein Distanzring und ein Federstecker vorgesehen. Der Federstecker ist nach Art einer Haarklemme geformt, wobei ein Schenkel durch eine radiale Bohrung am Bolzenende hindurch geschoben wird und der andere Schenkel das Bolzenende auf einem Teil des Umfangs formschlüssig federnd umschließt. Dadurch ist ein unbeabsichtigtes Herausziehen oder Herausrutschen des Federsteckers verhindert. Ein Griffende ermöglicht dennoch eine leichte Montage bzw. Demontage des Federsteckers.

Vorzugsweise ist gemäß Anspruch 3 eine Verwendung der Vorrichtung zur Kraft- und Bewegungsübertragung bei Weichenstellsystemen vorgesehen. Denkbar sind jedoch auch diverse andere Einsatzmöglichkeiten, bei denen es auf leichte Montier- bzw. Demontierbarkeit eines Lagers auf einen Bolzen ankommt.

Die Erfindung wird nachfolgend anhand figürlicher Darstellungen näher erläutert. Es zeigen
- Figur 1: die wesentlichen Baugruppen einer Gelenkkopfbefestigung und
- Figur 2: die Baugruppen gemäß Figur 1 in montiertem Zustand.

Eine Stange, beispielsweise Gelenkstange 1 für ein Weichenstellsystem, soll um eine im Wesentlichen senkrecht zur Längsachse 2 der Gelenkstange 1 ausgerichtete Achse 3 um einen bestimmten Winkel schwenkbar oder um 360° drehbar gelagert werden. Dazu ist ein Gelenklager 4 vorgesehen, welches einerseits mit der Gelenkstange 1 fest verbunden ist und andererseits an einem zur Achse 3 fluchtenden Bolzen 5 fixiert ist. Das Gelenklager 4 ist mit nicht dargestellten Lagerelementen, beispielsweise nach Art eines Kugellagers, ausgestattet, wodurch die Schwenk- oder Drehbewegung der Gelenkstange 1 ermöglicht wird. Ein Lagerinnenring 6 verschließt das Lagergehäuse innenseitig und dient der festen Verbindung mit den Bolzen 5. Zwischen Lagerinnenring 6 und Bolzen 5 ist eine leichte Untermaßpassung vorgesehen. Dadurch lässt sich das Gelenklager 4 samt Gelenkstange 1 leicht auf den Bolzen 5 aufschieben. Damit eine drehsichere Verbindung zwischen Lagerinnenring 6 und Bolzen 5 entsteht, ist der Bolzen 5 mit einer umlaufenden Nut 7 versehen, in die ein Federring 8 eingesetzt wird. Die Bemaßung von Nut 7 und Federring 8 ist dabei derart getroffen, dass sich der Lagerinnenring 6 immer noch relativ leicht auf den Bolzen 5 aufschieben lässt, aber dennoch eine ausreichende Klemmung zwecks Verdrehsicherung entsteht.

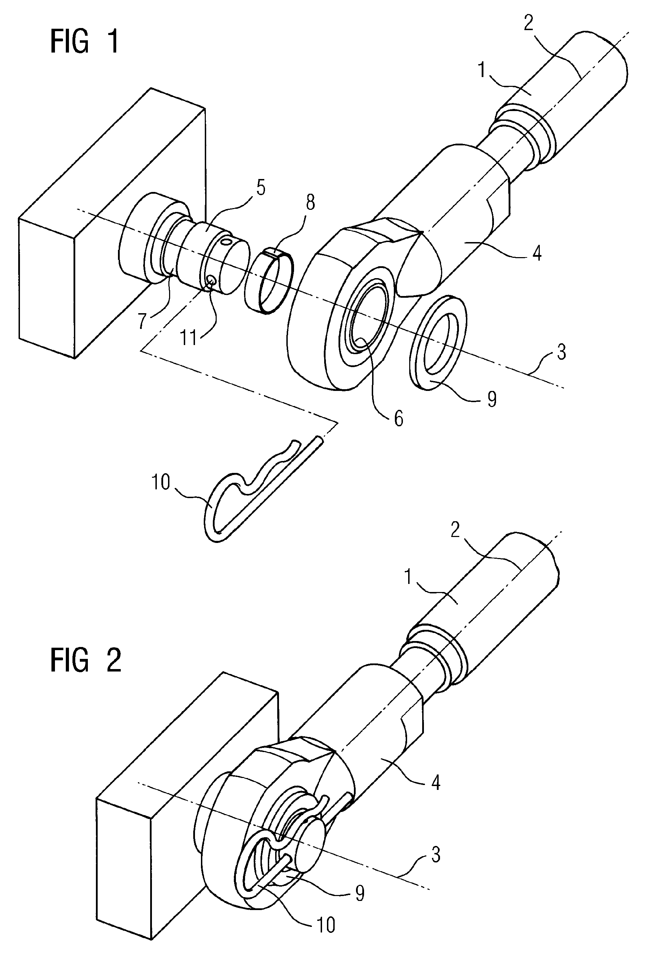

Ein Distanzring 9 und ein Federstecker 10 am Bolzenende sorgen für die axiale Lagefixierung des Gelenklagers 4 auf den Bolzen 5. Der Federstecker 10 wird mit einem Schenkel durch Bohrungen 11 am Bolzenende gesteckt und mit einem zweiten Schenkel klemmend über das Bolzenende geschoben, wie Figur 2 zeigt. Zur leichten Montage und Demontage ist der Federstecker 10 mit einem ösenartigen Griffende versehen.

Durch die Untermaßpassung zwischen Lagerinnenring 6 und Bolzen 5 und die Klemmung mittels des Federringes 8 ist bei abgezogenem Federstecker 10 das Gelenklager 4 mit der Gelenkstange 1 ohne große Kraftanstrengung und ohne besonderes Werkzeug auf den Bolzen 5 aufschiebbar bzw. von den Bolzen 5 abziehbar.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Vorrichtung zur Kraft- und Bewegungsübertragung mit einer Stange, insbesondere Gelenkstange (1), die an einem Gelenklager (4) befestigt ist, welches mittels eines Lagerinnenringes (6) auf einem Bolzen (5) fixiert ist,
**dadurch gekennzeichnet,**
**dass** zwischen den Lagerinnenring (6) und dem Bolzen (5) eine Untermaßpassung vorgesehen ist und der der Bolzen (5) eine umlaufende Nut (7) aufweist, in die ein Federring (8) zur kraftschlüssigen Verbindung von Lagerinnenring (6) und Bolzen (5) einsetzbar ist.

2. Vorrichtung nach Anspruch 1,
**dadurch gekennzeichnet,**
**dass** das Gelenklager (4) mittels Distanzring (9) und Federstecker (10) auf dem Bolzen (5) in axialer Richtung fixiert ist.

3. Vorrichtung nach einem der vorangehenden Ansprüche, **gekennzeichnet durch**
die Verwendung zur Kraft- und Bewegungsübertragung an Weichenstellsystemen.
